Europäisches Patentamt

European Patent Office

Office européen des brevets

(19)

(11) Numéro de publication: **0 118 372**
**B1**

(12) **FASCICULE DE BREVET EUROPEEN**

(45) Date de publication du fascicule du brevet:
**20.11.86**

(51) Int. Cl.⁴: **F 16 L 33/02**

(21) Numéro de dépôt: **84400482.0**

(22) Date de dépôt: **09.03.84**

(54) **Procédé d'assemblage de la chape avec la bande d'un collier de serrage, et colliers obtenus par ce procédé.**

(30) Priorité: **10.03.83 FR 8303945**

(73) Titulaire: **ETABLISSEMENTS CAILLAU, 4, rue Béranger, F-92100 Boulogne-Billancourt (FR)**

(43) Date de publication de la demande:
**12.09.84 Bulletin 84/37**

(72) Inventeur: **Irio, Francis, 5, Rue du Bac, F-32610 Chabris (FR)**
Inventeur: **Chene, Richard, La Rue Maray, F-41320 Mennetous-sur-Cher (FR)**
Inventeur: **Uzac, Pierre, 69, Rue du Colonel Vaslin de la Vaissière, F-41200 Romorantin-Lanthenay (FR)**

(45) Mention de la délivrance du brevet:
**20.11.86 Bulletin 86/47**

(84) Etats contractants désignés:
**BE CH DE GB IT LI NL**

(74) Mandataire: **Descourtieux, Philippe et al, CABINET BEAU de LOMENIE 55 rue d'Amsterdam, F-75008 Paris (FR)**

(56) Documents cités:
**CH - A - 102 595**
**DE - A - 2 116 466**
**DE - C - 865 085**
**US - A - 2 395 273**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rapporte d'une façon générale aux colliers de serrage du type utilisé couramment pour raccorder des canalisations, pour la fixaton, par exemple, d'un tuyau sur un embout, ou pour des applications analogues.

Elle concerne plus spécialement les colliers de serrage du type comportant une bande de métal destinée à entourer l'élément à serrer et munie vers une extrémité d'une chape dans laquelle on introduit l'autre extrémité de la bande qui doit entourer cet élément, des moyens étant prévus pour immobiliser cette autre extrémité de la bande par rapport à la chape une fois que le serrage a été effectué. Ces moyens sont généralement constitués par des profilages ou aspérités prévus, d'une part, sur la bande, au moins vers son extrémité engagée à travers la chape lors du serrage et, d'autre part, à l'intérieur de la chape elle-même. La réalisation de tels profilages ou de telles aspérités complique la fabrication du collier et augmente en conséquence son prix de revient. Par ailleurs, il en résulte la présence de discontinuités, reliefs ou creux dans la surface de la bande qui s'applique contre l'élément à serrer, par exemple contre le tuyau en augmentant le frottement au cours des derniers stades du serrage.

On a déjà proposé de bloquer de tels colliers en position serré par une déformation conjointe de la chape et de la bande engagée dans celle-ci au moyen d'un poinçon sur lequel on frappe à l'aide d'un marteau (collier BAND-IT-HOUDAILLE).

Ceci évite la nécessité de prévoir des profilages ou aspérités dans la bande et la chape comme indiqué précédemment, mais toutefois le blocage du collier exige alors la déformation à la fois de la chape et de la bande, donc un effort ou impact non négligeable qui, du fait qu'il est exercé directement au droit du tuyau puisqu'appliqué à la chape, peut aboutir à une rupture d'un embout, par exemple en matière plastique, sur lequel le tuyau est adapté.

Le but de l'invention est de créer un procédé d'assemblage de la chape avec la bande d'un collier de serrage de ce type dans des conditions ménageant, dans la zone de sortie du brin de la bande libre hors de la chape, un espace suffisant pour pouvoir assurer à cet endroit la déformation de la bande du collier pour blocage. On conserve ainsi les avantages résultant de l'utilisation d'une bande de collier lisse, à savoir une réduction du prix de revient et une meilleure application de la bande contre le tuyau, avec une diminution du frottement de la bande à la fois sur le tuyau et dans la chape, et on évite les inconvénients qui résultent de l'application d'un choc directement sur la chape du collier.

Il est usuel, dans les colliers de serrage du type considéré par l'invention, de réaliser la solidarisation de la chape et de la bande par passage de la bande à l'intérieur de la chape. Des moyens sont alors prévus pour retenir la chape sur la bande dans le sens longidutinal de celle-ci. Ces moyens peuvent être constitués, par exemple, par des bossages du fond de la chape, immobilisant celle-ci sur la bande. Il est également connu de ménager dans le fond de la chape, par découpe, une barrette formant une lumière de passage de la bande. Cette barrette est ensuite repoussée vers le plan du fond de la chape après engagement de la bande, pour déformer celle-ci et réaliser ainsi la solidarisation requise. La liaison obtenue est toutefois une liaison glissante qui n'établit pas un verrouillage absolu des deux pièces.

Ce mode d'assemblage a en outre pour conséquence un faible dégagement entre le brin de bande portant la chape et le brin libre sortant de celle-ci, ce qui gêne la déformation désirée de la bande au moyen d'un outil approprié, sans impact sur la chape et sans transmission d'un choc à l'élément entouré par le collier.

L'invention est matérialisée, sous l'un de ses aspects, dans un procédé d'assemblage de la chape avec la bande d'un collier de serrage, caractérisé en ce qu'on ménage par découpe, dans la partie formant le fond de la chape, au moins une languette rabattable bordée de part et d'autre par des parties de ce fond de la chape, on redresse cette languette, on adapte la chape par son fond sur la bande du collier, et on rabat ladite languette sous cette bande, en exerçant de préférence un effort de déformation qui repousse la partie de la bande placée au droit de ladite languette entre les parties restantes du fond de la chape.

Suivant un mode de réalisation préférentiel, on forme par découpe, dans le fond de la chape, deux languettes séparées l'une de l'autre dans le plan longitudinal médian de ce fond de la chape, ces languettes étant redressées et la chape étant placée sur la bande dans une relation de chevauchement de celle-ci, en vue de rabattement desdites languettes sous cette bande.

Ainsi, la bande n'est plus engagée à l'intérieur de la chape, mais elle est fixée sous celle-ci, d'une manière qui permet une bonne automatisation du processus d'assemblage.

La fixation est assurée par la déformation de la bande, qui pénètre entre les parties restantes du fond de la chape.

Ce mode s'assemblage fournit comme indiqué, du fait de la fixation de la bande sous la chape, un dégagement entre le brin de bande portant la chape et son extrémité libre, qui permet l'adaptation d'un outil afin de déformer, après serrage du collier autour de l'élément ou du tuyau, la partie de bande qui se trouve juste au-delà de la chape vers son extrémité libre, d'une manière réalisant ainsi le blocage de collier en position serrée sans devoir agir sur la chape elle-même par impact, avec les inconvénients précités.

Suivant une autre particularité, on prévoit dans la partie de bande devant recevoir la chape, de chaque côté de cette bande, une zone ou oreille légèrement redressée, ménagée par entaillage des bords de la bande. Ces oreilles pénètrent, en position assemblée, dans la découpe ménagée dans le fond de la chape, de sorte qu'elles constituent des butées franches qui, prenant appui de part et d'autre contre les bords de cette découpe, s'opposent à tout déplacement longitudinal de la chape par rapport à la bande, en réalisant ainsi une liaison absolument sans glissement entre ces pièces.

En outre, ces parties ou oreilles redressées servent à positionner la chape sur la bande et favorisent le rabattement des languettes de la chape sous cette bande.

L'encastrement alors réalisé de l'ensemble formé par la partie de bande déformée et les languettes dans la découpe du fond de la chape permet par ailleurs d'obtenir, tout en complétant la liaison requise, un profil inférieur le plus régulier possible, sans relief agressif nuisible à l'étanchéité.

L'invention concerne également, sous un autre aspect, les colliers de serrage du type général considéré, dans lesquels la chape est assemblée avec la bande per le procédé décrit.

L'invention concerne par ailleurs, sous un autre aspect encore, un procédé de blocage en position serrée d'un collier du type décrit ci-avant, consistant à déformer le brin de bande sortant de la chape juste au-delà de cette chape, pour empêcher le recul de la bande du collier et réaliser ainsi le blocage requis en condition de serrage, en tirant parti de l'espace ménagé entre les brins de bande au voisinage de la chape du fait de la fixation de la bande du collier sous cette chape pour l'adaptation d'un outil de déformation.

La description qui va suivre, faite en regard des dessins annexés, donnés à titre non limitatif, permettra de mieux comprendre l'invention.

La figure 1 est une vue de profil avec coupe partielle de la partie terminale d'une bande de collier devant recevoir une chape.

La figure 2 est une vue en coupe transversale par la ligne II-II en figure 1.

La figure 3 est une vue de profil avec coupe partielle montrant la chape fixée sur la bande du collier, l'extrémité libre de cette bande étant engagée dans la chape après avoir entouré un élément ou objet.

La figure 4 est une vue de dessus correspondant à la figure 3.

La figure 5 est une vue d'extrémité correspondant à la figure 3.

La figure 6 est une vue en coupe transversale par la ligne VI-VI en figure 3.

La figure 7 est une vue analogue à la figure 3 mais montrant la partie concernée du collier après blocage de celui-ci en position serrée par déformation de la bande.

La figure 8 est une vue en plan correspondant à la figure 3.

La figure 9 est une vue en perspective d'un flan de métal destiné à former la chape.

Sur les dessins on a désigné de façon générale par la référence 1 la bande du collier de serrage, dont l'extrémité destinée à recevoir la chape est désignée par 2, tandis que son autre extrémité, engagée dans la chape après avoir entouré l'élément ou l'objet à serrer, est désignée par 3.

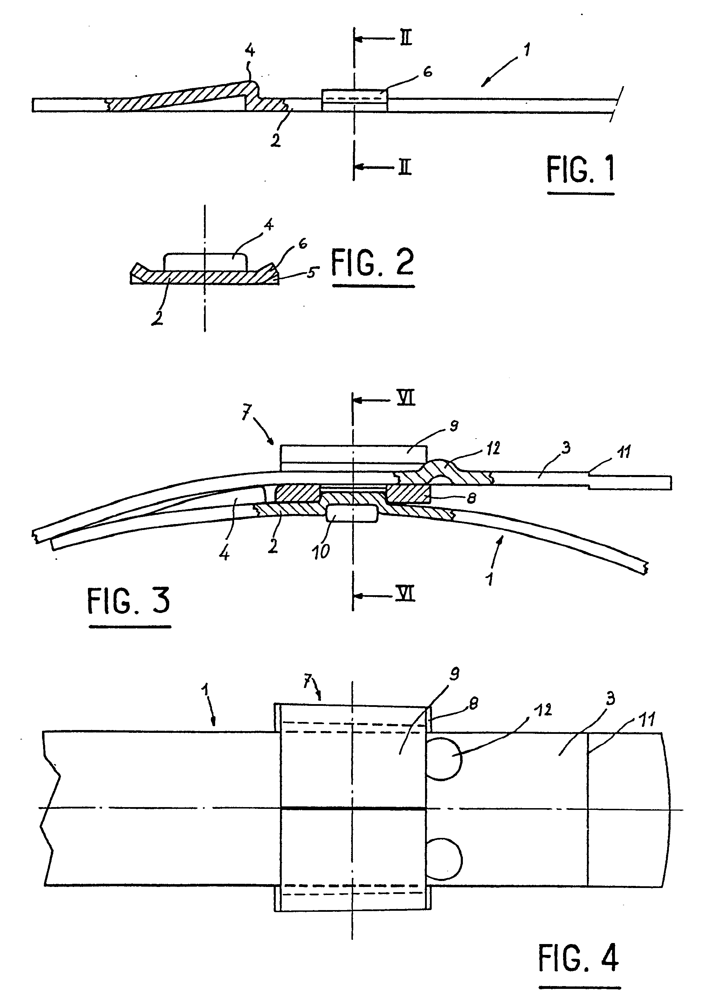

On voit à l'examen de la figure 1, que l'extrémité 2 de la bande 1 a été, dans sa partie formant bavette, profilée de manière à ménager un bossage 4 en soi connu constituant une rampe d'appui de la bande facilitant sa pénétration dans la chape et évitant la «cassure» d'entrée préjudiciable au rendement du collier.

Deux entailles ont été formées, comme indiqué en 5 (fig. 2), de chaque côté de la bande 1, dans la partie devant recevoir la chape, sur une petite partie de la largeur de cette bande, afin de ménager deux oreilles qui sont redressées par rapport au plan de la bande, comme visible en particulier en 6 sur la figure 2. Le but de ces oreilles apparaîtra plus loin.

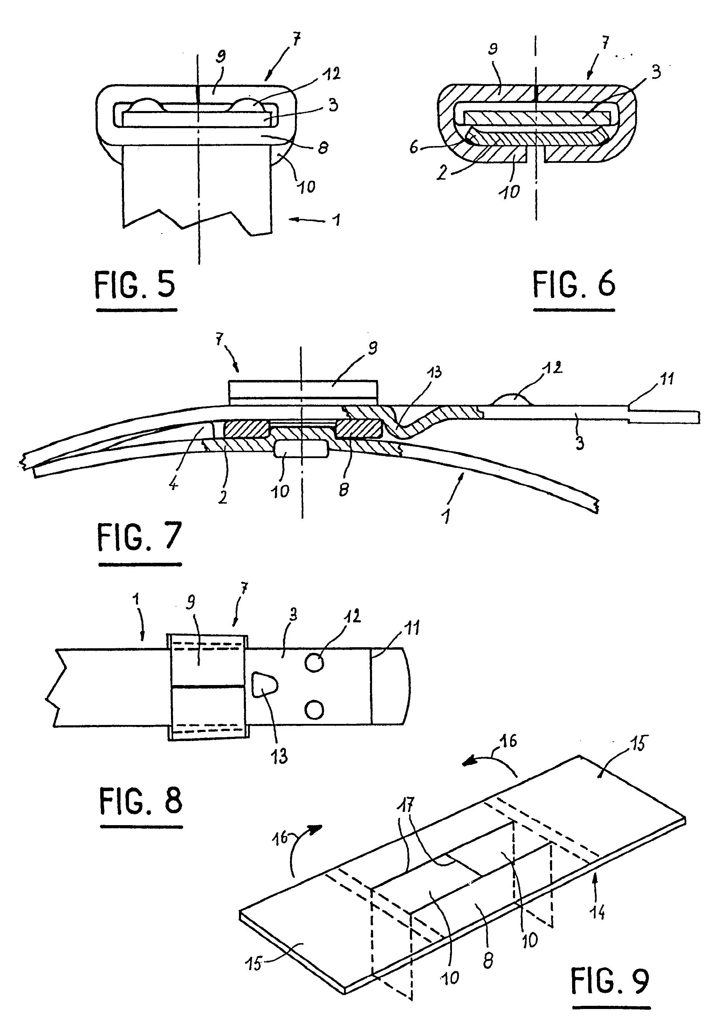

La chape, désignée dans son ensemble par la référence 7, est formée à partir d'un flan de tôle ou feuillard 14 (fig. 9) d'épaisseur appropriée, qui est destiné à être rabattu sur lui-même par ses parties marginales 15, comme indiqué par des flèches 16, pour former un fond de chape 8 (fig. 3) et une partie supérieure 9 dans laquelle le deux bords du flan 14 formant la chape se rejoignent sur l'axe longitudinal médian de cette chape.

Suivant l'invention, on prévoit dans la partie du flan 14 formant le fond 8 de la chape des découpes ménageant deux languettes 10 opposées l'une à l'autre. A cet effet, cette partie du flan formant le fond de la chape est entaillée selon des lignes en H 17, en ménageant dans le fond de la chape deux parties latérales. Les languettes 10 ainsi formées sont alors coudées vers le bas par rapport à ce fond 8 (comme indiqué en pointillé en fig. 9), en ménageant dans celui-ci une découpe ou lumière.

Dans cette condition, la chape préformée peut être adaptée sur la partie 2 de la bande 1 destinée à recevoir, au droit des oreilles 6, la chape venant ainsi chevaucher la bande en étant positionnée par ces oreilles 6. Quand cette condition a été obtenue, les languettes 10 sont rabattues sous la bande 1, qui est ainsi appliquée sous la chape 7. Les oreilles inclinées 6 favorisent ce rabattement des languettes comme cela est bien visible sur la figure 6. L'effort de rabattement est calculé de telle sorte que la partie de la bande 1 qui se trouve au droit des oreilles 6, entre les deux parties restantes du fond 8 situées de part et d'autre des languettes, soit déformée et repoussée dans la découpe ménagée entre ces parties restantes, comme visible sur la figure 3.

Dans cette condition, les oreilles 6 de la bande sont retenues entre les bords de la découpe ménagée dans le fond de la chape, en constituant des butées franches fournissant une liaison absolument sans glissement entre la chape et la bande.

On notera par ailleurs que lors du rabattement des languettes 10, les parties restantes du fond 8 de la chape sont légèrement écartées l'une de l'autre, ce qui favorise la pénétration de la bande dans la découpe de ce fond de la chape sans effet de cisaillement de cette bande. Cet écartement des parties restantes du fond 8 de la chape est visible notamment sur la vue en plan qui forme la figure 4.

On voit sur les figures 3 et 7 que, du fait de ce mode d'assemblage de la chape, qui permet la fixation de la bande du collier sous cette chape, on obtient en outre lors du serrage du collier, entre le brin de bande qui se trouve juste derrière la chape 7 et le brin de bande qui sort de cette chape, un espace suffisant pour assurer le blocage en place du collier par déformation de la bande comme indiqué ci-après.

On notera tout d'abord que, dans le mode de réalisation représenté, la partie 3 de la bande comporte un décrochement 11 qui a pour but de permettre l'adaptation d'un outil de traction destiné à assurer le serrage du collier autour de l'élément ou de l'objet.

Deux bossages 12 sont également prévus pour éviter l'échappement de cette partie 3 de la bande 1 par rapport à la chape. Dans la condition représentée sur la figure 3, le collier est «ouvert» selon son diamètre maximum, et il est engagé dans cette position sur l'élément ou l'objet à serrer. La présence de ces bossages 12 évite d'avoir à réenfiler la bande dans la chape quand le collier a été adapté autour de l'élément ou objet.

Quand le degré de serrage requis a été atteint, la partie 3 de la bande 1 du collier est alors déformée comme indiqué en 13 sur la figure 7, ce qui bloque le collier dans sa condition de serrage. La déformation obtenue s'oppose en effet au recul du collier dans la chape.

On voit à la lecture de ce qui précède que le procédé d'assemblage décrit, en ménageant comme indiqué un espace libre suffisant pour l'adaptation d'un outil juste en arrière de la chape, du fait de la position de la bande sous la chape dans la condition assemblée, permet le blocage du collier par déformation comme décrit et ainsi l'utilisation de colliers lisses, ne comportant pas les profilages ou aspérités de blocage usuels, avec les avantages qui en découlent comme indiqué précédemment.

## Revendications

1. Procédé d'assemblage de la chape avec la bande d'un collier de serrage, caractérisé en ce qu'on ménage par découpe, dans la partie formant le fond (8) de la chape (7), au moins une languette rabattable (10) bordée de part et d'autre par des parties de ce fond de la chape, on redresse cette languette, on adapte la chape par son fond sur la bande (1, 2) du collier, et on rabat ladite languette sous cette bande, en exerçant de préférence un effort de déformation qui repousse la partie de la bande placée au droit de ladite languette entre les parties restantes du fond de la chape, de sorte que la bande est fixée sous le fond de la chape du collier.

2. Procédé suivant la revendication 1, caractérisé en ce qu'on forme par découpe, dans le fond (8) de la chape (7), deux languettes (10) séparées l'une de l'autre dans le plan longitudinal médian de ce fond de la chape, on redresse ces languettes, on place la chape sur la bande dans une relation de chevauchement de celle-ci et on rabat lesdites languettes sous cette bande, en exerçant de préférence un effort de déformation qui repousse la partie de la bande placée au droit de ces languettes entre les parties restantes du fond de la chape.

3. Procédé suivant la revendication 1 ou 2, caractérisé en ce qu'on forme dans la partie de bande (1, 2) devant recevoir la chape (7), sur au moins un côté de cette bande, une zone ou oreille redressée en biseau (6), constituant une butée franche par engagement entre les bords de la découpe ménagée dans le fond de la chape par la formation de la ou des languettes en réalisant aisni une liaison sans glissement entre la chape et la bande, et facilitant le rabattement de la ou des languettes (10) sous la bande pour la fixation de la chape, ainsi que le positionnement de cette chape sur la bande.

4. Procédé suivant la revendication 3, caractérisé en ce que ces zones ou oreilles (6) redressées en biseau sont ménagées par entaillage (en 5) des bords de la bande (1, 2) et déformation des parties ansi entaillées.

5. Procédé suivant l'une quelconque des revendications précédentes, caractérisé en ce qu'on ménage en outre, par déformation, dans la partie (2) de la bande (1) formant bavette située au-delà de la zone de réception de la chape (7), un bossage (4) formant rampe d'appui pour la bande et facilitant sa pénétration dans la chape.

6. Collier de serrage du type comportant une bande portant une chape dans laquelle l'extrémité libre de la bande est enfilée pour le serrage d'un élément ou objet tel qu'un tuyau caractérisé en ce qu'il est obtenu par assemblage de la chape (7) avec la bande (1) par le procédé suivant l'une quelconque des revendications précédentes.

7. Collier de serrage suivant la revendication 6, caractérisé en ce que l'extrémité libre (3) de la bande (1) présente au moins un bossage (12) évitant l'échappement de cette extrémité libre par rapport à la chape lors de la pose du collier.

8. Procédé de blocage d'un collier suivant la revendication 6 ou 7 en position serrée, caractérisé en ce qu'on déforme la bande (1) dans sa partie terminale (3) sortant de la chape (7) juste au-delà de cette chape (en 13) au moyen d'un outil adapté sur cette bande dans cette position, en tirant parti de l'espace ménagé entre les brins de bande du fait de la fixation de la bande sous la chape du collier.

## Patentansprüche

1. Verfahren zum Verbinden einer Hülse mit einem Band einer Klemme, dadurch gekennzeichnet, dass durch Ausschneiden in dem Bereich, der den Boden (8) der Hülse (7) bildet, mindestens eine umschlagbare Zunge (10) ausbildet, die um beide Seiten des Bodens der Hülse gebördelt ist, diese Zunge aufgerichtet wird und die Hülse mittels ihres Bodens an dem Band (1, 2) der Klemme angepasst wird und die Zunge unter diesem Band hochgeschlagen wird, indem vorzugsweise eine Verformungskraft ausgeübt wird, die den Teil des Bandes zurückschiebt, der auf der Geraden dieser Zunge zwischen den stehenbleibenden Teilen des Bodens der Hülse gelegen ist, derart, dass das Band unter dem Boden der Hülse der Klemme befestigt ist.

2. Verfahren nach Anspruch 1, dadurch gekennzeichnet, dass durch Ausschneiden in dem Boden (8) die Hülse (7) zwei Zungen (10) ausgebildet werden, die voneinander in der Mittellängsebene dieses Bodens der Hülse getrennt sind, dass die beiden Zungen aufgerichtet werden, die Hülse auf dem Band so angebracht wird, dass sich letzteres überlappt und dadurch, dass die Zungen unter diesem Band umgeschlagen werden, indem vorzugsweise eine Verformungskraft ausgeübt wird, die den Teil des Bandes zurückschiebt, der auf der Geraden dieser Zungen zwischen den bleibenden Bereichen des Bodens der Hülse angeordnet ist.

3. Verfahren nach Anspruch 1 oder 2, dadurch gekennzeichnet, dass in einem Teil des Bandes (1, 2), bevor die Hülse (7) angebracht wird, mindestens auf einer Seite dieses Bandes ein als Schrägkante (6) aufgerichteter Bereich oder ein Ohr geformt wird, dass einen bündigen Anschlag bildet durch ein Eingreifen zwischen den Rändern des Ausschnitts, der in den Boden der Hülse eingearbeitet ist durch die Bildung einer Zunge bzw. Zungen, womit somit eine gleitfreie Verbindung zwischen der Hülse und dem Band hergestellt wird und wodurch das Umschlagen der Zunge oder Zungen (10) unter das Band erleichtert wird, zur Befestigung der Hülse, sowie der Positionierung dieser Hülse auf dem Band.

4. Verfahren nach Anspruch 3, dadurch gekennzeichnet, dass die Bereiche oder Ohren (6), die abgeschrägt aufgerichtet sind, durch Einkerben (bei 5) der Ränder des Bandes (1, 2) und entsprechendes Verformen der so eingekerbten Teile, gebildet werden.

5. Verfahren nach einem der vorstehenden Ansprüche, dadurch gekennzeichnet, dass ausserdem durch Verformen in dem Bereich (2) des Bandes (1), der einen Lappen oberhalb des Aufnahmebereichs der Hülse (7) eine Ausbeulung (4) anbringt, die eine Andruckrampe für das Band bildet und dessen Eindringen in die Hülse erleichtert.

6. Klemme mit einem eine Hülse tragenden Band, bei der das freie Ende des Bandes zum Klemmen eines Elementes oder Objektes wie zum Beispiel einem Rohr eingeführt ist, dadurch gekennzeichnet, dass es durch ein Verbinden der Hülse (7) mit dem Band (1) erhalten wird gemäss dem Verfahren nach einem der vorstehenden Ansprüche.

7. Klemme nach Anspruch 6, dadurch gekennzeichnet, dass das freie Ende (3) des Bandes (1) mindestens eine Ausbeulung (12) aufweist, die das Lösen dieses freien Endes aus der Hülse während des Anbringens der Klemme verhindert.

8. Verfahren zum Blockieren einer Klemme in einer Klemmposition nach Anspruch 6 oder 7, dadurch gekennzeichnet, dass das Band (1) in seinem Endbereich (3), der aus der Hülse (7) austritt, gerade oberhalb dieser Austrittsstelle aus der Hülse (bei 13) mittels eines an dieses Band angepassten Werkzeuges in dieser Position verformt wird, indem der Raum, der unter dem Ende des Bandes ausgebildet ist, aufgrund der Befestigung des Bandes unter der Hülse der Klemme, ausgenutzt wird.

**Claims**

1. Method of assembly of the shell with the strap of a clamping collar, characterized in that cutting-out is used to make, in the part forming the base (8) of the shell (7), at least one flattenable tongue (10) bordered on either side by parts of this base of the shell, this tongue is raised, the shell is fitted with its base on the strap (1, 2) of the collar, and the said tongue is flattened under this strap, preferably by applying a bending force which drives the part of the shell placed in the position of the said tongue between the remaining parts of the base of the shell, so that the strap is fixed under the base of the shell of the collar.

2. Method according to claim 1, characterized in that cutting-out is used to make, in the base (8) of the shell (7), two tongues (10) separated from one another in the median longitudinal plane of this base of the shell, these tongues are raised, the shell is placed on the strap in a straddling relationship to the latter and the said tongues are flattened under this strap, preferably by applying a bending force that drives the part of the strap placed in the position of these tongues between the remaining parts of the base of the shell.

3. Method according to claim 1 or 2, characterized in that the formation, in the strap part (1, 2) which is to receive the shell (7), on at least one side of this strap, of a zone or ear raised on a bevel (6), constituting a free stop by engagement between the edges of the cutout made in the base of the shell by the formation of the tongue or tongues and embodying thereby a non-slip bond between the shell and the strap, and facilitating the flattening of the tongue or tongues (10) under the strap for the fixation of the shell, as well as the positioning of this shell on the strap.

4. Method according to claim 3, characterized in that these zones or ears (6) raised on a bevel are formed by notching at (5) the edges of the strap (1, 2) and bending of the parts thus notched.

5. Method according to any one of the preceding claims characterized in that there is also made, by bending, in the part (2) of the strap (1) forming a «bib» situated beyond the zone of reception of the shell (7), a boss (4) forming a support ramp for the strap and facilitating its penetration into the shell.

6. Clamping collar of the type composed of a strap bearing a shell into which the free end of the strap is threaded for the clamping of an element or object such as a pipe, characterized in that it is obtained by assembly of the shell (7) with the strap (1) by the method according to any one of the preceding claims.

7. Clamping collar according to claim 6, characterized in that the free end (3) of the strap (1) has at least one boss (12) preventing the escape of this free end relative to the shell when the collar is put in place.

8. Method of locking a collar according to claim 6 or 7 in clamped position, characterized in that the strap (1) is bent in its terminal portion (3) emerging from the shell (7) just beyond this shell (at 13) by means of a tool fitted over this strap in this position, utilizing the space formed between the strap portions resulting from the fixation of the strap under the collar shell.

0 118 372

FIG. 1

FIG. 2

FIG. 3

FIG. 4

7

FIG. 5

FIG. 6

FIG. 7

FIG. 8

FIG. 9